# EUROPEAN PATENT SPECIFICATION

(11) **EP 1 933 311 B1**
(45) Date of publication and mention of the grant of the patent: **02.06.2010**
(21) Application number: 07301615.6
(22) Date of filing: 03.12.2007
(51) Int. Cl.: G11B 7/0065

(54) **Pre-exposure and curing of photo-sensitive material for optical data storage**
Vorbelichtung und Härtung eines lichtempfindlichen Materials zur Speicherung optischer Daten
Pré-exposition et séchage de matériau photosensible pour stockage de données optiques

(30) Priority: 13.12.2006 EP 06126033
(43) Date of publication of application: 18.06.2008
(73) Proprietor: Thomson Licensing, 92443 Issy-les-Moulineaux Cedex (FR)
(72) Inventor: Hossfeld, Wolfgang, 78050 Villingen-Schwenningen (DE); Przygodda, Frank, 78050 Villlingen-Schwenningen (DE)
(74) Representative: Schmidt-Uhlig, Thomas

(56) References cited:
- EP-A- 1 708 180
- US-A- 3 934 461
- US-A- 6 154 432
- US-A1- 2002 071 145

## Description

The present invention relates to an apparatus for writing to optical storage media capable of performing pre-exposure and/or curing of a photo-sensitive material for optical data storage, in particular for holographic data storage.

One concept for increasing the capacity of optical storage media is to use holographic data storage. In this case the whole volume of the holographic storage medium is used for storing information, not just a few layers as for conventional optical storage media. In holographic data storage digital data are stored by recording the interference pattern produced by the superposition of two coherent laser beams, where one beam is modulated by a spatial light modulator and carries the information to be recorded in the form of data pages.

For holographic data storage, but also for other types of optical data storage, photo-sensitive materials such as photopolymers are used for optical data recording. These materials change specific physical properties, e.g. the refractive index, in dependence on the total light energy that is locally absorbed by the material. These changes allow to record data within the material. For some materials it is necessary to pre-expose the material before data can be efficiently recorded, and to expose the material again after recording data. This last exposure or post-exposure is also known as curing, fixing or flood curing. Pre-exposure is necessary to increase the sensitivity of the material, which is needed for achieving a high recording data rate. Curing is necessary to process all unprocessed material after recording, i.e. the recorded data is fixed and the recording of additional data in the material is prevented. It is desirable that pre-exposure and curing do not lead to any detectable data structure in the material. The aim of pre-exposure is to raise the sensitivity of the material before storing data. The aim of curing is to lower the sensitivity of the material after recording data. For both pre-exposure and curing the volume of the photo-sensitive material where data is to be or has been recorded needs to be exposed to light in such a way that the resulting changes of the physical properties do not disturb the data recording quality. Usually this is achieved by exposing the material to incoherent light, which is emitted, for example, by an array of LEDs. In this way a homogeneous change of the physical properties is obtained throughout the recording volume. Using incoherent light sources an inhomogeneous exposure of the material, caused for example by interference effects, is avoided.

For example, US 4,799,746 and US 4,687,720 disclose methods for curing a photo-sensitive material used for holographic data storage. In both cases a coherent light source like a laser diode is used for optical data recording. An additional source of incoherent light is used for curing. As a consequence two at least partially separate optical paths and two separate electronic drivers to control the light sources are needed. This complicates the optical system and raises its cost.

Similarly, EP 1 708 180 A2, which is considered to constitute the closest prior art, discloses an apparatus for reading from and writing to holographic storage media, which has a first light source for generating a coherent reading or recording light beam, and a second light source for generating an incoherent fixing light beam. The fixing light beam is directed to a holographic storage medium using a dichroic mirror.

US 63154,432 discloses an optical storage system for holographic storage of data on an optical card. The system includes three light source for generating a reading light beam, a writing light beam, and an erasure light beam, respectively. An optical fiber-based multiplexer selectively directs one of the three light beams towards the optical card.

It is an object of the invention to propose an apparatus for writing to holographic storage media having a simplified arrangement for pre-exposure and/or curing of a holographic storage medium.

According to the invention, this object is achieved by an apparatus for reading from and/or writing to holographic storage media, with a first light source for emitting a first light beam for writing data to the holographic storage medium, a second light source for emitting a second light beam for pre-exposure and/or curing of the holographic storage medium, and a spatial light modulator, which has a plurality of pixels that are switchable between at least two states for modulating at least a part of the first light beam, and which are arranged such that in a first state they direct the first light beam towards the holographic storage medium, and that in a second state they direct the second light beam towards the holographic storage medium.

For holographic storage media two light beams are needed, a coherent light beam for writing to the holographic storage medium and an incoherent light beam for pre-exposure and/or curing of the holographic storage medium. The invention proposes to use a spatial light modulator (SLM) in such a way that it can steer either of the light beams into the main optical path of the apparatus. Thus a single element is sufficient to selectively steer the light of both light sources into the optical path. This simplifies the optical setup and reduces the number of components, and hence also the manufacturing cost. For directing the second light beam towards the holographic storage medium the spatial light modulator is switched from the first state, in which it modulates at least a part of the first light beam, into the second state. The second light source is then switched on for emitting the second light beam. Of course, the second light source may likewise be switched on before switching the spatial light modulator into the second state.

A further advantage of the solution according to the invention is that pre-exposure and/or curing can be performed with a spatially varying exposure dose. The exposure dose is defined as the product of the exposure intensity and the exposure time. By selectively switching only some of the pixels of the SLM into the second state, and/or by individually adapting the time during which the pixels remain in the second state, a desired exposure dose profile is generated.

Advantageously, the spatial light modulator is a digital mirror device having a plurality of switchable micro mirrors. The digital mirror device has the advantage that the two different states can easily be realized by tilting the micro mirrors in two different directions, e.g. by +30° and -30°. By using further discrete tilting angles additional states can be realized, e.g. for selectively directing more than two light beams towards the holographic storage medium.

For a better understanding the invention shall now be explained in more detail in the following description with reference to the figures. In the exemplary embodiment, the invention is applied to a holographic storage medium. It is understood that the invention is also applicable to other types of optical storage media and that specified features can also expediently be combined and/or modified without departing from the scope of the present invention. In the figures:
- Fig. 1: schematically depicts a prior art apparatus for reading from and writing to holographic storage media,
- Fig. 2: schematically depicts an apparatus according to the invention for reading from and writing to holographic storage media,
- Fig. 3: shows a top view of a digital mirror device of the apparatus of Fig. 2, and
- Fig. 4: shows a side view of the digital mirror device of Fig. 3.

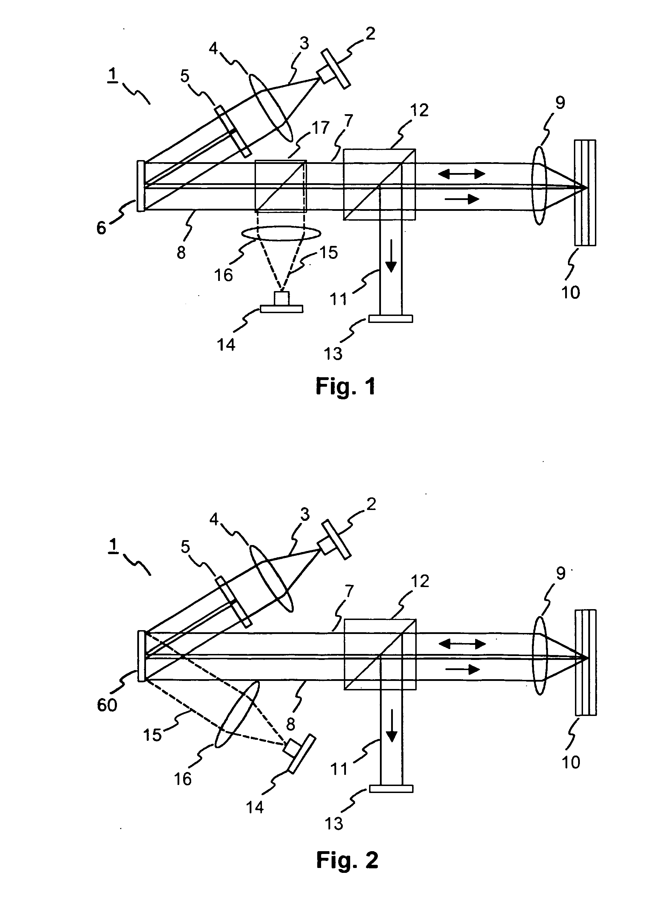

In holographic data storage digital data are stored by recording the interference pattern produced by the superposition of two coherent laser beams. An exemplary setup of a prior art apparatus 1 for reading from and writing to holographic storage media is shown in Fig. 1. A source of coherent light, e.g. a laser diode 2, emits a light beam 3, which is collimated by a collimating lens 4. The light beam 3 is then divided into two separate light beams 7, 8. In the example the division of the light beam 3 is achieved using a first beam splitter 5. However, it is likewise possible to use other optical components for this purpose. A reflective spatial light modulator (SLM) 6 modulates one of the two beams, the so called "object beam" 7, to imprint a 2-dimensional data pattern. In addition, the reflective spatial light modulator 6 reflects the further beam, the so called "reference beam" 8. Both the object beam 7 and the reference beam 8 are focused into a holographic storage medium 10, e.g. a holographic disk, by an objective lens 9. At the intersection of the object beam 7 and the reference beam 8 an interference pattern appears, which is recorded in a photo-sensitive layer of the holographic storage medium 10. In the described setup the reference beam 8 is reflected by the SLM 6. Of course, it is likewise possible to provide an independent optical path for the reference beam 8.

The stored data are retrieved from the holographic storage medium 10 by illuminating a recorded hologram with the reference beam 8 only. The reference beam 8 is diffracted by the hologram structure and produces a copy of the original object beam 7, the reconstructed object beam 11. This reconstructed object beam 11 is collimated by the objective lens 9 and directed onto a 2-dimensional array detector 13, e.g. a CCD-array, by a second beam splitter 12. The array detector 13 allows to reconstruct the recorded data.

For pre-exposure and/or curing an additional light beam 15 is emitted by a source 14 of incoherent light, e.g. a light emitting diode (LED), and is coupled into the optical path by a further lens 16 and a further beam splitter 17 and illuminated onto the holographic storage medium 10.

In Fig. 2 an apparatus 1 according to the invention for reading from and writing to holographic storage media is shown. The optical setup is essentially the same as in Fig. 1. However, in this setup the reflective SLM 6 of Fig. 1 is replaced by a special digital mirror device 60, i.e. an array of switchable micro mirrors 61. The digital mirror device 60 on the one hand modulates the object beam 7 and reflects the reference beam 8. On the other hand, it is also used for directing the pre-exposure or curing light beam 15 emitted by the light source 14 towards the holographic storage medium 10. In this way the further beam splitter 17 of Fig. 1 can be omitted. Again, it is likewise possible to provide an independent optical path for the reference beam 8.

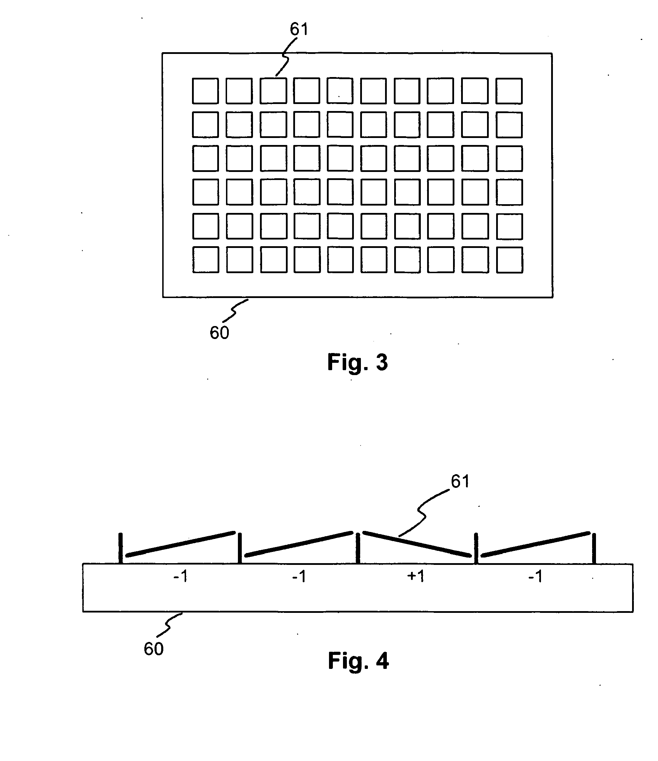

A top view of the digital mirror device 60 is depicted in Fig. 3. A side view is shown in Fig. 4. The digital mirror device 60 consists of an array of switchable micro mirrors 61. It is used both as a spatial light modulator for the coherent light beams 7, 8 and as a steering mirror for the incoherent light beam 15. For this purpose the micro mirrors 61 are switchable between two states, where each state corresponds to a different tilt angle of a single micro mirror 61. In the following those states will be called state -1 and +1. When the digital mirror device 60 is illuminated by the light beams 7, 8 of the coherent light source 2, the micro mirrors 61 which are in state -1 generate bright pixels in the main optical path. The micro mirrors 61 which are in +1 state reflect the light into a direction away from the main optical path. Thus they generate dark pixels in the optical path. In this way the object beam 7 is spatially modulated. As generally no spatial modulation is desired for the reference beam 8, all micro mirrors 61 illuminated by the reference beam 8 are set into the -1 state.

For pre-exposure and curing the source 14 of incoherent light is switched on and the digital mirror device 60 is illuminated by the incoherent light beam 15. The micro mirrors 61 are switched into the +1 state and steer the incoherent light beam 15 towards the holographic storage medium 10. Advantageously all micro mirrors 61 are switched into the +1 state to achieve a maximum intensity and a homogeneous intensity distribution in the main optical path.

In the figures the invention is explained with reference to an apparatus for reading from and writing to holographic storage media. Of course, the invention can also be used in an apparatus for only writing to holographic storage media. In addition, the general idea of the invention is likewise applicable to other optical systems where a switching between two ore more different light sources is necessary. The light sources do not need to be one source of coherent light and one source incoherent light. For example, the light sources can also be three lasers emitting red, green and blue light, respectively, to generate a color picture. In this case the digital mirror device 60 would need three states, i.e. three controllable tilt angles of the micro mirrors 61.

## Claims

1. Apparatus (1) for writing to holographic storage media (10), with a first light source (2) for emitting a first light beam (7, 8) for writing data to a holographic storage medium (10), a second light source (14) for emitting a second light beam (15) for pre-exposure and/or curing of the holographic storage medium (10), and a spatial light modulator (6), which has a plurality of pixels (61) that are switchable between at least two states for modulating at least a part of the first light beam (7), wherein in a first state the pixels (61) of the spatial light modulator (6) are adapted to direct the first light beam (7, 8) towards the holographic storage medium (10), **characterized in that** in a second state the pixels (61) of the spatial light modulator (6) are adapted to direct the second light beam (15) towards the holographic storage medium (10).

2. Apparatus according to claim 1, **wherein** the spatial light modulator (6) is a digital mirror device (60) having a plurality of switchable micro mirrors (61).

3. Apparatus according to claim 1 or 2, **wherein** the first light beam (7, 8) is a coherent light beam.

4. Apparatus according to one of claims 1 to 3, **wherein** the second light beam (15) is an incoherent light beam.

5. Method for pre-exposure and/or curing of an optical storage medium (10) using a spatial light modulator (6) with a plurality of pixels (61), **having** the steps of:
- switching the pixels (61) of the spatial light modulator (6), which in a first state modulate at least a part of a first light beam (7) emitted by a first light source (2), into a second state,
- switching on a second light source (14) for emitting a second light beam (15), and **characterized by** the step of
- directing the second light beam (15) with the spatial light modulator (6) towards the optical storage medium (10) for pre-exposure and/or curing of the optical storage medium (10).

6. Method according to claim 5, **wherein** the spatial light modulator (6) is a digital mirror device (60) having a plurality of switchable micro mirrors (61).

7. Method according to claim 5 or 6, **wherein** the optical storage medium (10) is a holographic storage medium.

8. Method according to claim 7, **wherein** the first light beam (7, 8) is a coherent light beam for writing to the holographic storage medium (10).

9. Method according to claim 7 or 8, **wherein** the second light beam (15) is an incoherent light beam.

10. Method according to one of claims 5 to 9, **further** having the step of generating a desired exposure dose profile by selectively switching only some pixels (61) of the spatial light modulator (6) into the second state and/or by individually adapting the time during which the pixels (61) of the spatial light modulator (6) remain in the second state.

## Patentansprüche

1. Vorrichtung (1) zum Schreiben auf holographische Speichermedien (10) mit einer ersten Lichtquelle (2) zum Emittieren eines ersten Lichtstrahls (7, 8) zum Schreiben von Daten auf ein holographisches Speichermedium (10), mit einer zweiten Lichtquelle (14) zum Emittieren eines zweiten Lichtstrahls (15) zur Vorbelichtung und/oder Härtung des Speichermediums (10) und mit einem räumlichen Lichtmodulator (6), der mehrere Pixel (61) aufweist, die zwischen mindestens zwei Zuständen schaltbar sind, um mindestens einen Teil des ersten Lichtstrahls (7) zu wobei die Pixel (61) des räumlichen Lichtmodulators (6) in einem ersten Zustand so beschaffen sind, sie den ersten Lichtstrahl (7, 8) in Richtung des holographischen Speichermediums (10) lenken, **dadurch gekennzeichnet, dass** die Pixel (61) des räumlichen Lichtmodulators (6) in einem zweiten Zustand so beschaffen sind, dass sie den zweiten Lichtstrahl (15) in Richtung des jholographischen speichermediums (10) lenken.

2. Vorrichtung nach Anspruch 1, bei der der räumliche Lichtmodulator (6) eine digitale Spiegelvorrichtung (60) mit mehreren schaltbaren Mikrospiegeln (61) ist.

3. Vorrichtung nach Anspruch 1 oder 2, bei der der erste Lichtstrahl (7, 8) ein kohärenter Lichtstrahl ist.

4. Vorrichtung nach einem der Ansprüche 1 bis 3, bei der der zweite Lichtstrahl (15) ein inkohärenter Lichtstrahl ist.

5. Verfahren zur Vorbelichtung und/oder Härtung eines optischen Speichermediums (10) unter Verwendung eines räumlichen Lichtmodulators (6) mit mehreren Pixeln (61), wobei das Verfahren die folgenden Schritte aufweist:
- Schalten der Pixel (61) des räumlichen Lichtmodulators (6), die in einem ersten Zustand mindestens einen Teil eines von einer ersten Lichtquelle (2) emittierten ersten Lichtstrahls (7) modulieren, in einen zweiten Zustand,
- Einschalten einer zweiten Lichtquelle (14) zum Emittieren eines zweiten Lichtstrahls (15) und **gekennzeichnet durch** den Schritt des:
- Lenkens des zweiten Lichtstrahls (15) mit dem räumlichen Lichtmodulator (6) in Richtung des optischen Speichermediums (10) zur Vorbelichtung und/oder Härtung des optischen Speichermediums (10).

6. Verfahren nach Anspruch 5, bei dem der räumliche Lichtmodulator (6) eine digitale Spiegelvorrichtung (60) mit mehreren schaltbaren Mikrospiegeln (61) ist.

7. Verfahren nach Anspruch 5 oder 6, bei dem das optische Speichermedium (10) ein holographisches Speichermedium ist.

8. Verfahren nach Anspruch 7, bei dem der erste Lichtstrahl (7, 8) ein kohärenter Lichtstrahl zum Schreiben auf das holographische Speichermedium (10) ist.

9. Verfahren nach Anspruch 7 oder 8, bei dem der zweite Lichtstrahl (15) ein inkohärenter Lichtstrahl ist.

10. Verfahren nach einem der Ansprüche 5 bis 9, ferner mit dem Schritt des Erzeugens eines gewünschten Belichtungsdosisprofils durch wahlweises Schalten nur einiger Pixel (61) des räumlichen Lichtmodulators (6) in den zweiten Zustand und/oder durch einzelnes Anpassen der Zeit, während der die Pixel (61) des räumlichen Lichtmodulators (6) in dem zweiten Zustand bleiben.

## Revendications

1. Appareil (1) permettant d'écrire sur des supports (10) de stockage holographique, comportant une première source lumineuse (2) pou émettre un premier faisceau lumineux (7, 8) pour écrira des données sur un support (10) de stockage holographique, une seconde source lumineuse (14) pour émettre un second faisceau lumineux (15) pour une pré-exposition et/ou un séchage du support (10) de stockage holographique, et un modulateur (6) de lumière spatial, qui possède une pluralité de pixels (61) qui sont commutables entre au moins deux états pour moduler au moins une partie du premier faisceau lumineux (7), dans lequel dans un premier état les pixels (61) du modulateur (6) de lumière spatial sont adaptés pour diriger le premier faisceau lumineux (7, 8) vers le support (10) de stockage holographique, **caractérisé en ce que** dans un second état les pixels (61) du modulateur (6) de lumière spatial sont adaptés pour diriger le second faisceau lumineux (15) vers le support (10) de stockage holographique.

2. Appareil selon la revendication 1, **dans lequel** le modulateur (6) de lumière spatial est un dispositif de miroir numérique (60) comportant une pluralité de micro-miroirs (61) commutables.

3. Appareil selon la revendication 1 ou 2, **dans lequel** le premier faisceau lumineux (7, 8) est un faisceau lumineux cohérent.

4. Appareil selon une des revendications 1 à 3, dans lequel le second faisceau lumineux (15) est un faisceau lumineux incohérent.

5. Procédé pour une pré-exposition et/ou un séchage d'un support (10) de stockage optique utilisant un modulateur (6) de lumière spatial ayant une pluralité de pixels (61), **comportant** les étapes consistant à :
- commuter les pixels (61) du modulateur (6) de lumière spatial, qui dans un premier état modulent au moins une partie d'un premier faisceau lumineux (7) émis par une première source lumineuse (2), dans un second état,
- commuter une seconde source lumineuse (14) pour émettre un second faisceau lumineux (15), et **caractérisé par** l'étape consistant à
- diriger le second faisceau lumineux (15) avec le modulateur (6) de lumière spatial vers le support (10) de stockage optique pour une pré-exposition et/ou un séchage du support (10) de stockage optique.

6. Procédé selon la revendication 5, **dans lequel** le modulateur (6) de lumière spatial est un dispositif de miroir numérique (60) comportant une pluralité de micro-miroirs (61) commutables.

7. Procédé selon la revendication 5 ou 6, **dans lequel** le support (10) de stockage optique est un support de stockage holographique.

8. Procédé selon la revendication 7, **dans lequel** le premier faisceau lumineux (7, 8) est un faisceau lumineux cohérent permettant d'écrire sur le support (10) de stockage holographique.

9. Procécé selon la revendication 7 ou 8, **dans lequel** le second faisceau lumineux (15) est un faisceau lumineux incohérent

10. Procédé selon une des revendications 5 à 9, comportant **en outre** l'étape consistant à générer un profil de dose d'exposition souhaité en commutant de manière sélective uniquement certains pixels (61) du modulateur (6) de lumière spatial dans le second état et/ou en adaptant de manière individuelle la durée pendant laquelle les pixels (61) du modulateur (6) de lumière spatial restent dans le second état.
